# EUROPEAN PATENT APPLICATION

(11) **EP 1 155 647 A1**
(43) Date of publication of application: **21.11.2001**
(21) Application number: 00830366.1
(22) Date of filing: 19.05.2000
(51) Int. Cl.: A47J 36/28

(54) **Method for the production of a disposable heat cartridge and heat cartridge thus obtained**

(71) Applicant: Pizzuto, Aldo, 86100 Campobasso (CB) (IT); Innocenti, Carlo, 52027 S. Giovanni Valdarno (AR) (IT)
(72) Inventor: Pizzuto, Aldo, 86100 Campobasso (CB) (IT); Innocenti, Carlo, 52027 S. Giovanni Valdarno (AR) (IT)
(74) Representative: Celestino, Marco

(57) **Abstract**

A heat cartridge (1) comprising a hollow body (40) that defines a chamber (2). A refractory material (6) lines the inner walls of the chamber (2) and contains a reactive material (7) capable of producing heat, for example a composition of ferric oxide and aluminium to obtain aluminium oxide, based on the reaction Fe₂O₃+2Al - Al₂O₃ +2Fe. The strongly exothermic reaction of the reactive material is sufficient for boiling a liquid (32) or other food. The high starting heat flux is retarded by the refractory material (6) so that the walls of the heat cartridge (1) do not burn out and a safe use is assured. An igniter candle (8) is provided for ignition of the reactive material (7) having a head (9) made of friction lighting material that can be associated to a lighting cap (10). The disposable heat cartridge (1) can be a heat source available in a desired moment without use of fire and capable of producing heat for boiling water for example for making hot drinks such as coffee, infusions, etc., for quickly cooking food, or for making pop-corn. Containers can be made for making hot drinks such as for example coffee, or for making pop-corn, which comprise the heat cartridge (1).

## Description

### Field of the invention

The. present invention relates to a method for the production of a disposable heat cartridge.

Furthermore the invention relates to a heat cartridge obtained with this method, in particular for individual applications, such as heating food, heating objects, for example in emergency cases or for camping.

The invention relates also to a disposable package for quick preparation of pop-corn by means of this heat cartridge.

### Background of the invention

Small heat sources are known, in particular gas cartridges, that can be used in gas portable hot plates. The most common applications are for heating food or for boiling liquid for cooking food, for preparing infusions, for washing or for filling warming pans.

In some cases it is not preferred nor possible to use gas portable hot plates, for example for reasons of encumbrance, or of weight or for exhaustion of the gas cartridges.

In other cases, disposable devices are known for the production of infusions, hot drinks, which need a heat source, based on a chemical exothermic reaction, incorporated in or at the base of a container for a liquid. By triggering the reaction in a chamber next to the container it is possible to heat the liquid by conductivity through the common wall.

The existing disposable devices based on chemical exothermic reactions, however, are not suitable to make enough heat, for example, for boiling a sufficient liquid amount for making an infusion, for quickly cooking food, or for making pop-corn.

### Summary of the invention

It is, then, object of the present invention, to provide a disposable heat cartridge that is a heat source available in a desired moment without use of fire and capable of producing heat for boiling water for example for making hot drinks such as coffee, infusions, etc., for quickly cooking food, or for making pop-corn.

It is another object of the present invention to provide a method for making a disposable heat cartridge, through strongly exothermic chemical reactions.

It is a further object of the present invention to provide the lighting means operable from outside of said heat cartridge without the use of fire.

It is a particular object of the present invention to provide a container for making hot drinks that is associated specifically with such a heat cartridge.

It is another particular object of the present invention to provide a container for making pop-corn by means of the above heat cartridge.

According to a first aspect of the present invention, a method for making a disposable heat cartridge provides the steps of :
- preparing a hollow body defining a chamber, the body having walls that at least in part coincide with the walls of the chamber;
- lining the walls of the chamber by means of refractory material;
- introducing in the chamber, within the lining in refractory material, a reactive material capable of producing heat through a strongly exothermic reaction;
- arranging means of ignition of the reactive material that cross the chamber; and
- arranging means for triggering the means of ignition, such that they can be ignited from outside of the chamber without use of fire.

According to another aspect of the present invention a disposable heat cartridge comprises:
- a hollow body defining a chamber, the body having walls that at least in part coincide with the walls of the chamber;
- a layer of refractory material that lines the walls of the chamber;
- a reactive material capable of producing heat that is located in the chamber within the layer of refractory material;
- means of ignition of the reactive material; and
- means for triggering the means of ignition.

The reactive material can be for example a product available on the market based on the strongly exothermic reaction of aluminium plus ferric oxide to obtain aluminium oxide. The strongly exothermic reaction of the reactive material is sufficient for boiling a liquid or for other uses as above described. The high starting heat flux is retarded by the refractory material so that the walls of the heat cartridge do not burn out and a safe use is assured.

The means of ignition preferably comprise an igniter candle that crosses the chamber and has an end outside the chamber but within the body. This end comprises a head coated with friction lighting material. The means for triggering comprise a cap that holds the head and that can be dragged from outside creating a relative movement with respect to the head that causes the lighting of the friction lighting material.

The lighting of the head propagates in a few seconds to all the igniter candle and the heat produced by the latter triggers the reaction in the exothermic reactive material.

The relative movement of the cap with respect to the head can be advantageously caused by a movement of relative rotation between the cap and an outer support.

In a first embodiment of the invention the body consists in two sheet metal cups that can be coupled to each other in order to define a closed space. The chamber is formed by two walls that engage with grooves made on the bottoms of the cups. This way, the chamber is set between the two walls and is defined also by the walls of the body same. This type of heat cartridge can be formed sealed so that it can be directly immersed in a liquid once triggered.

In a second embodiment of the invention, the body is formed by a tubular cup having an end closed by an end wall and having the other walls that coincide with the walls of the chamber, the end wall being crossed by the igniter candle, the body comprising a protection cover for the end of the igniter candle that comprises the head. The cover can be crossed by a puller for operating from outside the means for lighting the head.

This second type of heat cartridge can be for example put into a recess of a special container filled of water or food to heat. The heat produced in the chamber crosses the walls of the tubular cup and strikes directly the walls of the recess and heats the water or the food present in the container.

In a third embodiment of the invention the body consists in a cup open at the top that defines the walls of the chamber, which is also open at the top, the edge of the opening of the cup being shaped for contacting the bottom wall of a container to heat. This type of cup can be used as heat cartridge directly within disposable coffee percolators or other disposable devices to make hot drinks. Such devices can have on the inner bottom wall a recess capable of housing the cartridge. The opening of the chamber can be closed by a aluminium film, which also takes part to the reaction, but before the lighting step prevents the reactive material from leaking.

Preferably, a tubular shell cover to which an end of the wire is tied can rotate coaxially with respect to the body and the rotation causes the movement of the cap of the igniter candle and then the lighting of the heat cartridge. The shell, for example of corrugated cardboard, is the outer wrapper of the package of the body and can also be closed at the bottom for concealing completely the bottom wall of the cup and insulating it from the contact with the hands.

The container heated by the disposable heat cartridge according to the invention can be advantageously filled with corn seeds and oil, whereby the heat allows the preparation of pop-corn. The container and the heat cartridge can be packaged ready for use with the ingredients for preparation of pop-corn, the container being closed at the top by an expansible cover.

### Brief description of the drawings

Further characteristics and the advantages of the heat cartridge and of the method according to the invention will be made clearer with the following description of some of its embodiments, exemplifying but not limitative, with reference to the attached drawings, wherein:
- figure 1 shows a sectional view of a first embodiment of a heat cartridge according to the invention;
- figure 2 shows a sectional view of a second embodiment of a heat cartridge according to the invention;
- figures 2A and 2B show a sectional view and a top plan view of a lighting cap of an igniter candle that can be used in association with the heat cartridge according to the invention;
- figure 2C shows a sectional view of a seal element to avoid the spilling of smoke of the igniter candle;
- figure 3 shows a sectional view of a possible special container that can be used in association with the heat cartridge of figure 2;

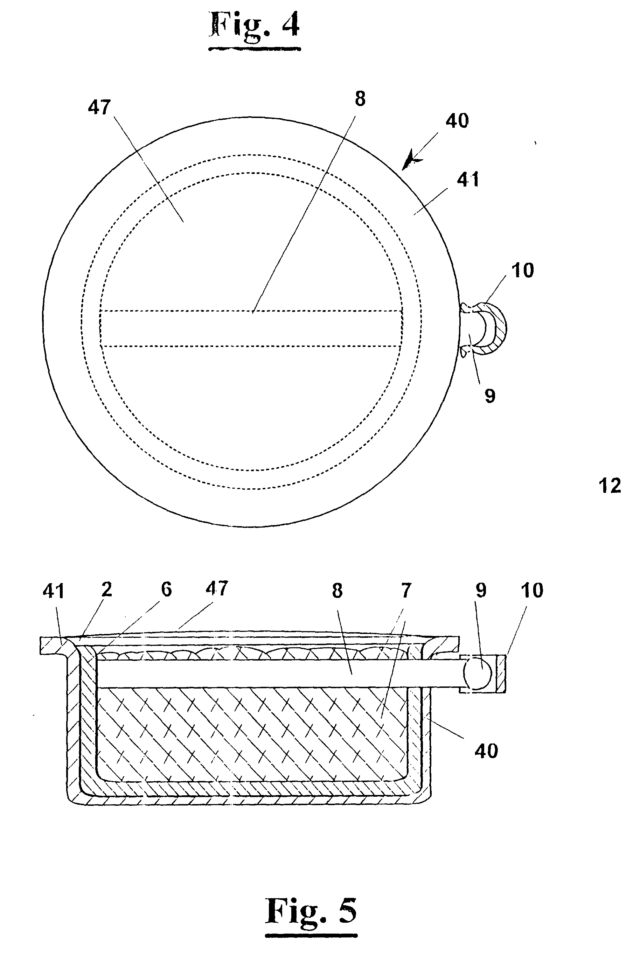

- figures 4 and 5 show respectively a top plan view and a cross sectional view of a third different embodiment of a heat cartridge according to the invention;
- figure 6 shows a container of water to heat for a coffee percolator wherein the heat cartridge has the shape of a cup;
- figure 7 shows a container for preparation of pop-corn, wherein the heat cartridge has the shape of a cup.

### Description of a preferred embodiment

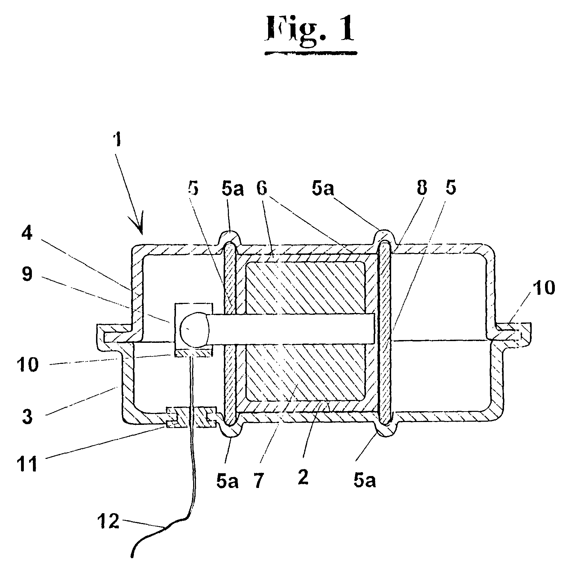

With reference to figure 1, a heat cartridge 1 according to the invention comprises a hollow body formed by a couple of sheet metal cups 3 and 4 that can be coupled to each other in order to define a closed space and a chamber 2. Chamber 2 is formed between two walls 5, which engage with grooves 5a made on the opposite bottoms of cups 3 and 4, and is in part defined by the walls same of cups 3 and 4. A refractory material 6 lines the inner walls of chamber 2 and holds a reactive material 7 capable of producing heat, for example comprising a mixture based on ferric oxide and aluminium to obtain aluminium oxide, according to the reaction Fe₂O₃+2Al Al₂O₃ + 2Fe, for example of the type known on the market as "Thermite".

This way the strongly exothermic reaction of Thermite, or other equivalent composition, is sufficient for boiling a liquid or for other uses as above described. The high starting heat flux is retarded by the refractory material so that the walls of the heat cartridge do not burn out and a safe use is assured.

An igniter candle 8 is provided for ignition of reactive material 7. Igniter candle 8, for example, has a head 9 made of friction lighting material that can be associated to a cap 10 for triggering the lighting of head 9 and then of igniter candle 8. The friction lighting material is for example of the type used for matches, whereas the igniter candle can be made of the material known for lighting stick products for celebrations, for example barium nitrate, magnesium oxide.

Cap 10 can be pulled from outside by means of a rope 12 that crosses the cup 3 by means of a seal element 11 for sealing the lighting smoke.

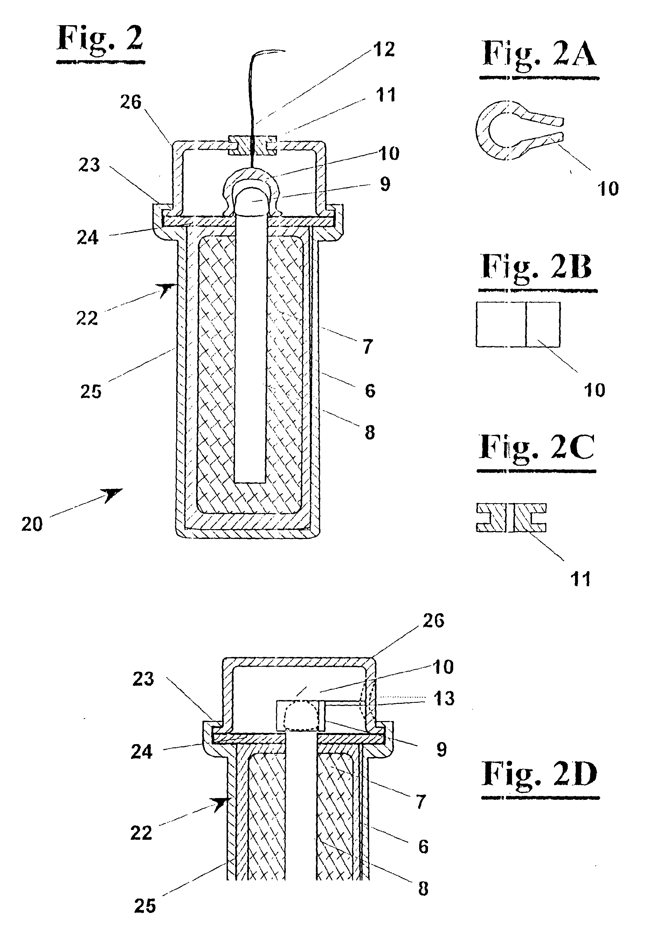

With reference to figure 2, in a second embodiment of the invention, the hollow body 22 of a heat cartridge 20 according to the invention is formed by a tubular cup having an end 23 closed by an end wall 24. The walls 25 of the tubular body define chamber 22 wherein reactive material 7 is present and, according to the invention, are lined by refractory material 6. Also in this case igniter candle 8 is provided for the ignition of reactive material 7. Head 9, for example made of friction lighting material, can be associated to a cap 10 (figure 2A, 2B) for triggering head 9 and then igniter candle 8. End wall 24 is crossed by igniter candle 8 and a protection cover 26 is provided for head 9. Cover 26 may have seal element 11 (figure 2C) crossed by a rope 12 operable from outside to move cap 10.

Alternatively, as shown in figure 2D, a portion 13 of cover 26 can be flexible and connected to cap 10, in order to drag away cap 10 from head 9 and to cause the lighting of igniter candle 8.

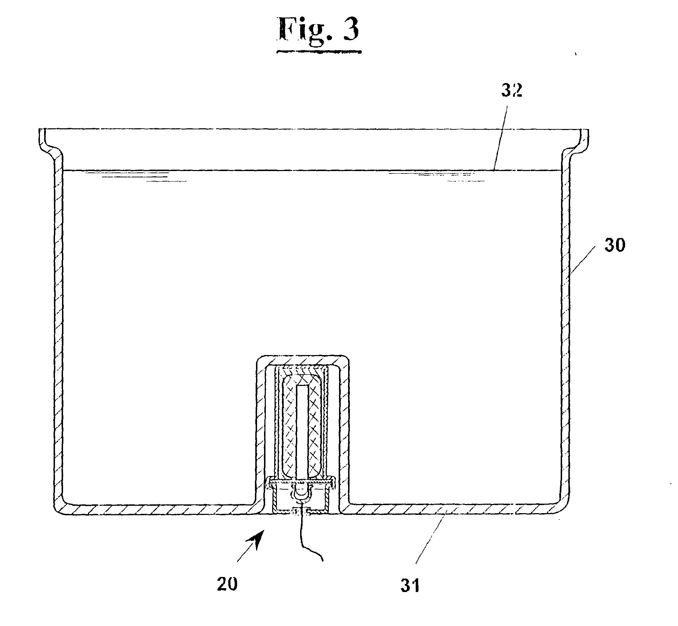

As shown in figure 3, heat cartridge 22 can be for example put into a recess 31 of a special container 30 filled of water 32 or food to heat. The heat produced by heat cartridge 22 by means of the lighting of reactive material 7 strikes directly the walls of the recess 31 and heats the water 32 or the food present in container 30.

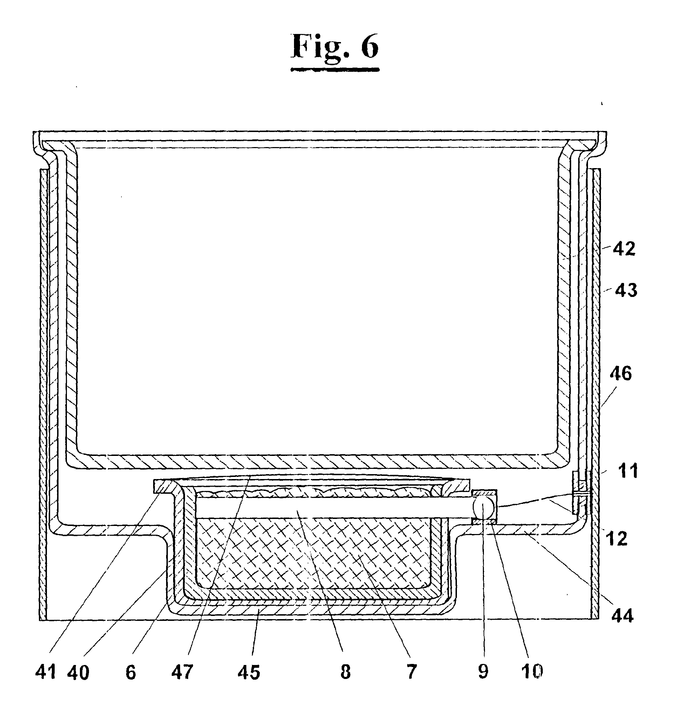

As shown in figures from 4 to 7 the chamber wherein reactive material 7 is present and the refractory lining 6 is a cup 40 open at the top. Its edge 41 is flange shaped for contacting the bottom wall of a container 42 to heat (figure 6). This type of cup can be used as heat cartridge directly within disposable coffee percolators or other disposable devices to make hot drinks, a base 43 of which can be seen in figure 6, having on the bottom 44 a recess 45 capable of housing cup 40.

Also in this case, an igniter candle 8 is provided for ignition of reactive material 7. The head 9 of the igniter candle is associated to a cap 10 for lighting by friction head 9 and then igniter candle 8. Advantageously, cap 10 is pulled by a rope 12 that passes through a seal element 11 associated to base 43. Also in this case, alternatively, in a way not shown but similar to figure 2D, a part of the cover can be flexible and connected to the cap, in order to pull away the cap from the head and cause the lighting of the igniter candle.

Preferably, a cylindrical shell 46 is provided to which wire 12 is tied. Shell 46, for example, is made of the same cardboard of the packaging wrapper, and can rotate coaxially with respect to the base causing the lighting of igniter candle 8 further to pulling wire 12.

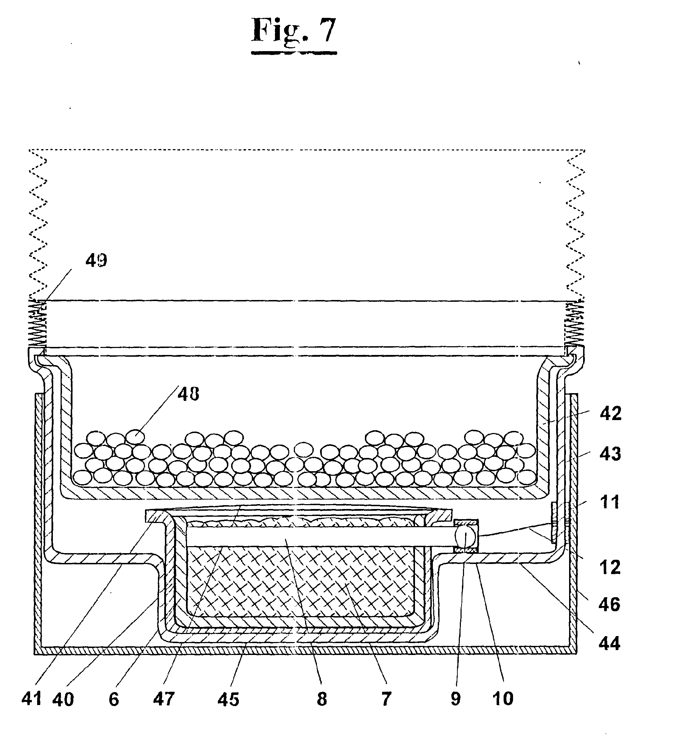

In the embodiment of figure 7, container 42, that in this case has lower height than the previous embodiment, can be advantageously filled with corn seeds 48 and oil, whereby the heat causes the production of pop-corn. Container 42 and cup 40, that is the heat cartridge, can be packaged ready for use, closed at the top by an accordion folded bag 49 for containing the pop-corn. Shell 46 can also be closed at the bottom for concealing completely the bottom wall of the cup and for insulating it from the contact with the hands. Shell 46 can be made of corrugated cardboard.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Disposable heat cartridge **characterised in that** it comprises:
- a hollow body defining a chamber, said body having walls that at least in part coincide with the walls of said chamber;
- a refractory material that lines the walls of said chamber;
- a reactive material capable of producing heat that is located in said chamber within said refractory material;
- means of ignition of the reactive material; and
- means for triggering said means of ignition.

2. Disposable heat cartridge according to claim 1, wherein said reactive material is based on a strongly exothermic reaction of aluminium plus ferric oxide to obtain aluminium oxide.

3. Disposable heat cartridge according to claim 1, wherein said refractory material that lines the walls of said chamber is made of foundry sand sprayed thereon or of foundry sand moulded shells.

4. Disposable heat cartridge according to claim 1, wherein said means of ignition comprise an igniter candle that crosses said chamber and has an end outside said chamber but within said body, means being provided for causing the lighting of said head that propagates rapidly to all the igniter candle, the heat produced by said igniter candle triggering an exothermic reaction in said reactive material.

5. Disposable heat cartridge according to claim 4, wherein said igniter candle comprises a material chosen between: barium nitrate, magnesium oxide.

6. Disposable heat cartridge according to claim 4, wherein said end of said igniter candle outside said chamber comprises a head coated with friction lighting material, the means for triggering comprising a cap that holds said head, means being provided for dragging from outside said cap with a relative movement with respect to said head that causes the lighting of said friction lighting material.

7. Disposable heat cartridge according to claim 6, wherein said means for dragging from outside said cap are chosen between a wire that can be pulled from outside and a flexible wall of said body connected to said cap.

8. Disposable heat cartridge according to claim 1, wherein said body comprises a couple of sheet metal cups that can be coupled to each other in order to define a closed space, the chamber being formed by two walls that engage with grooves made on the bottoms of said cups, the part of the chamber set between the two walls being defined by the walls same of the body.

9. Disposable heat cartridge according to claim 1, wherein said body is formed by a tubular cup having an open end wherein an end closure wall engages, the other walls of the tubular cup coinciding with the walls of said chamber, the end wall being crossed by said igniter candle, a protection cover being provided for the end of said igniter candle that comprises said head, said cover being crossed by a puller for operating from outside the means for lighting said head.

10. Disposable heat cartridge according to claim 1, wherein said body consists in a cup open at the top that defines the walls of said chamber, which is also open at the top, the edge of the opening of the cup being shaped for contacting the bottom wall of a container to heat.

11. Disposable heat cartridge according to claim 10, wherein said cup is closed at the top by an aluminium film, which also takes part to the reaction, and that before the lighting prevents said reactive material from leaking.

12. Disposable device for quick preparation of pop-corn, **characterised in that** it comprises a heat cartridge formed a cup metal open at the top that defines the walls of a chamber open at the top lined of refractory material and filled of reactive material capable of giving a exothermic reaction, means being provided for ignition of said reactive material from outside, the edge of the opening of the cup being shaped for contacting the bottom wall of a container to heat wherein ingredients for preparation of pop-corn are provided, said container being closed at the top by an expansible cover.

13. Disposable device for quick preparation of coffee or other hot drinks, **characterised in that** it comprises a heat cartridge formed by a metal sheet cup open at the top that defines the walls of a chamber open at the top lined of refractory material and filled of reactive material capable of giving an exothermic reaction, means being provided for ignition from outside of said reactive material, the edge of the opening of the cup being shaped for contacting the bottom wall of a container to heat wherein ingredients are provided for quick preparation of coffee or other hot drinks.

14. Method for making a disposable heat cartridge **characterised in that** it comprises:
- preparation of a hollow body defining a chamber, said body having walls that at least in part coincide with the walls of said chamber;
- lining the walls of said chamber by means of a refractory material;
- introducing in the chamber within the lining in refractory material a reactive material capable of producing heat through a strongly exothermic reaction;
- arranging means of ignition of said reactive material that cross said chamber; and
- arranging means for triggering said means of ignition, so that they can be ignited from outside without use of fire.
